# EUROPEAN PATENT SPECIFICATION

(11) **EP 0 994 578 B1**
(45) Date of publication and mention of the grant of the patent: **04.04.2007**
(21) Application number: 99402127.7
(22) Date of filing: 26.08.1999
(51) Int. Cl.: H04B 7/24

(54) **Adaptation of radio transmission parameters of a cordless communication system**
Anpassung der Funkübertragungsparameter eines drahtlosen Kommunikationssystems
Adaptation de paramètres de transmission radio de système de communications sans fil

(30) Priority: 31.08.1998 FR 9810885; 31.08.1998 FR 9810886
(43) Date of publication of application: 19.04.2000
(73) Proprietor: CANON EUROPA N.V., 1185 EG Amstelveen (NL)
(72) Inventor: Becot, Sylvain, 35650 Le Rheu (FR); Caillerie, Alain, 35700 Rennes (FR); Delumeau, François, 35000 Rennes (FR); Visa, Pierre, 35000 Rennes (FR); Gouache, Stéphane, 35700 Rennes (FR)
(74) Representative: Santarelli

(56) References cited:
- EP-A- 0 827 287
- WO-A-90/04293
- WO-A-97/11535
- GB-A- 2 289 989
- US-A- 5 490 287
- US-A- 5 510 876
- "LOCAL-AREA NETWORKS GO WIRELESS" IEEE SPECTRUM, vol. 33, no. 9, 1 September 1996 (1996-09-01), pages 34-40, XP000638473

## Description

The present invention concerns a method and device for adapting radio transmission parameters, according to the environment.

The invention applies in particular to office equipment such as photocopiers, facsimile machines or printers, equipped with an antenna and a device for transmitting and receiving radio messages. The commands to print documents can therefore be made at a distance from a computer, but provided that the radio link is of good quality.

In an office environment, the characteristics of propagation and attenuation of electromagnetic waves change continuously. The movement of an individual in the vicinity of an antenna modifies the propagation characteristics and causes signal attenuations. This problem is all the more of a nuisance if the appliance having the antenna is a photocopier, a facsimile machine or a printer. This is because a large number of users periodically go close to this type of device and may thereby interfere with the radio link, or even prevent any communication. Such devices are therefore continuously subjected to high variations in reception conditions over periods of short duration.

A first solution would consist of effecting a transmission at low transmission rate with a very high number of redundancies, so as to mitigate the loss of information relating to the changes to the channel. However, this technique does not make it possible to fully use the resources of the transmission channel.

Many methods, such as those disclosed in the patents WO 9004293 and US 4696027, describe devices measuring the state of the channel in order to modify at least one radio transmission parameter.

The patent WO 9004293 describes a system, in this case a portable telephone which, according to the geographical place in which the device is situated, modifies one of the transmission parameters. These parameters include, amongst other things, the transmission power, the carrier frequency, the modulation type, the modulation index, and the spacing of the channels. Information on the geographical location can be obtained by means of a GPS (Global Positioning System). For example, in town, an area assumed to have a high population density, the transmitted power is reduced so as not to interfere with other terminals. On the other hand, in more deserted areas, the power is at a maximum in order to benefit from a long range. This technique is absolutely not applicable to office equipment, which is fixed, and whose operating conditions are not sensitive to particular geographical locations.

The patent US 4696027 describes a radio system which, by measuring the level of the signal emanating from a first radio device, gives information to the transmitter, which modifies the transmission power. This type of system resolves many problems, notably the problems of interference between portable telephones, but is expensive to implement. This is because it is necessary to add a means of evaluating the received power, as well as a means of modifying the transmitted power. In addition, in decreasing the transmission power, this device does not improve the quality of the radio link since the received power becomes lower.

Finally, many patents concern the detection of individuals for alarm systems. Moreover, inventions also use the sensors of office equipment, but solely for the purpose of controlling the use of such equipment (counting sheets, verifying access rights, etc). It is clear that none of these inventions has the objective of improving the conditions of a radio transmission.

The invention is aimed at guaranteeing optimum transmission conditions for a radio device placed in an area where the characteristics of the channel vary greatly. The radio device consists of an item of office equipment such as a photocopier, a facsimile machine or a printer.

The adaptation method and device which are the objects of the present invention make it possible to get rid of this problem by modifying the radio transmission parameters each time the presence of an individual is detected close to the antenna. The first step of the method of the present invention consists of implementing the detection of a person by means of existing sensors on an office appliance (pressure on the keyboard, movement of the drawers or cover, etc). Next, the device adapts the radio transmission parameters (transmission power, modulation type or index, etc) so as to guarantee a good quality of radio link. Implementing the invention amounts to anticipating and thus preventing any possible degradation in the state of the transmission channel.

The present invention is thus simple and inexpensive to implement since it uses sensors already existing on an item of office equipment, and requires only a modification to the software controlling this same equipment.

The present invention relates to a device comprising office equipment and a radio transmission means, said office equipment having sensors which include:
- at least one of a key board, a touch screen, a cover position sensor, a sensor for the presence of a sheet in a feed tray, a sensor for the presence of a sheet in a sheet discharge tray, a sheet presence sensor in a loader containing documents to be copied, and/or a sensor for the presence of a sheet jammed in the sheet path;
- means of estimating the presence of a user, adapted to take into account the signals coming from said sensors, and
- means of modifying a radio transmission parameter of said transmission means according to the estimation of presence effected by said estimation means.

By virtue of these provisions, when, by deduction concerning the state of the sensors, it is estimated that it is probable that a user is situated close to the radio transmission means, at least one radio transmission parameter is adapted so that the attenuation caused by the user is, at least partially, compensated for.

By virtue of these provisions, the present invention is particularly easy to implement since all the sensors mentioned above are of a known type and are already used in office equipment.

According to particular characteristics, the adaptation device as succinctly disclosed above has a means of determining a period elapsed after a radio transmission parameter modification by the modification means, said modification means being adapted, when said period has elapsed, to give each parameter its initial value, an initial value which preceded the modification resulting from the estimation of the presence of a user.

By virtue of these provisions, the radio transmission parameters are once again in their initial state after a time which corresponds to (that is to say is at least equal to) the time of probable presence of the user close to the office equipment.

According to particular characteristics, the transmission means is adapted so that:
- at least one radio transmission power used is modified,
- at least one radio frequency value used is modified,
- at least one type of modulation used is modified,
- at least one modulation index is modified,
- at least one spectrum spreading factor is modified,
- at least one frequency jumping sequence is modified,
- at least one equalisation of the spectrum on reception, an equalisation implemented by said filter, is modified, and/or
- at least one type of error correction code is modified.

By virtue of these provisions, implementation of the present invention is particularly effective and uses known radio components and systems.

Correlatively, the present invention relates to a method of adapting radio transmission parameters of device comprising office equipment and radio transmission means, said office equipment having sensors which include at least one of:
- a keyboard,
- a touch screen,
- a cover position sensor,
- a sensor for the presence of a sheet in a feed tray,
- a sensor for the presence of a sheet in a sheet discharge tray,
- a sheet presence sensor in a loader containing documents to be copied, and/or
- a sensor for the presence of a sheet jammed in the sheet path.

According to the invention, said method includes:
- a step of estimating the presence of a user during which the signals coming from said sensors are taken into account, and
- a step of determining a radio transmission parameter of said transmission means taking into account the estimation of presence effected during the estimation step.

In addition, the particularities of the radio transmissions make the positioning of cordless office equipment tricky for non-experts.

The document WO 97/34381 describes a method and a device for demanding, by means of a sound signal, a repositioning of the antenna of a mobile telephone by the user when the reception conditions are poor. This method operates in real time and requests the user to reposition himself even in the case of a temporary degradation of the received signal. This method cannot consequently be applied to the case of a photocopier, often bulky, and which it is wished to move as little as possible.

The document US 4 654 867 describes a portable telephone capable of transmitting data packets. When synchronisation with the base station is lost, the base station triggers an eight-second timer. If during these eight seconds the telephone has not sent a synchronisation frame, the radio link is considered to be definitively lost. This method, though it makes it possible to detect the loss of radio contact, is inflexible and provides excessively imprecise information. This is because, in the case of a facsimile machine or a photocopier, a person may be present for a few minutes in front of the equipment and modify its reception conditions, without this involving a definitive change.

The document US 5 467 341 describes a method and a device for warning the users of a local cordless network of the fact that they are arriving at the limit of coverage of a cell. This invention includes means for measuring the quality of the radio link and producing statistics. This information is obtained by a central server which continuously collects information of each on the mobiles. This solution requires the setting up of a complicated and expensive client-server architecture.

US patent 5 722 072 describes a method for measuring the quality of the radio channel based on the use of a timer. In a cordless telephone network comprising partially overlapping cells, a telephone counts how many times the signal received is greater than a threshold value for each of the adjacent cells, and decides to change cell according to its measurement. This solution, though it makes it possible to effectively measure the signal received for each of the cells, does not make it possible to optimise the positioning of one of the appliances in a point to point link.

An optimisation device detects, by virtue of a timer, the length of a persistent interference on the transmission channel on the basis of information supplied by a radio module.

Such an optimisation device, located in an item of office equipment, such as a photocopier, enables this photocopier to generate alarms or printed reports, in order to request being repositioned by an operator.

Preferentially, in order to make this information more reliable and to not be affected by the temporary presence of persons, this process is inhibited as soon as a key or sensor is activated on the office equipment.

This is because, in the particular case of an item of office equipment, users often position themselves around the equipment and may degrade the cordless communication. In this situation, it is not desirable for the equipment to consider this degradation to be permanent. In the preferential embodiment, this problem is resolved by the use of sensors, such as the equipment control panel, for deactivating the diagnosis process when the presence of a user is detected.

The optimisation device has the advantage of producing reliable diagnoses on the quality of the radio channel, since these diagnoses are based on a measurement made over a long period.

Because of this, the positioning of a cordless appliance becomes simple even for a user without special technical knowledge.

Since the periodicity of the diagnoses of the radio link can be changed, the device described here can be used both at the time of installation and during the normal use of a cordless office appliance. However, preferentially, in the context of an installation, the periodicity of the diagnoses will be a few minutes (typically five minutes) whereas, in the context of the normal operation of the office equipment, this periodicity will be longer (typically 30 minutes).

The invention also relates to a network, a computer, a copier, a facsimile machine, a printer, a scanner, a camera and an information terminal, characterised in that they have an adaptation device as succinctly disclosed above.

The invention also relates to:
- an information storage means which can be read by a computer or a microprocessor storing instructions of a computer program characterised in that it makes it possible to implement the adaptation method of the invention as succinctly disclosed above, and
- an information storage means which is removable, partially or totally, and which can be read by a computer or microprocessor storing instructions of a computer program characterised in that it makes it possible to implement the adaptation method of the invention as succinctly disclosed above.

The preferential or particular characteristics, and the advantages, of this device, this network, this computer, this facsimile machine, this printer, this scanner, this camera, this information terminal and these information storage means being identical to those of the method as succinctly disclosed above, these advantages are not repeated here.

Other advantages, aims and characteristics of the present invention will emerge from the following description, given with regard to the accompanying drawings, in which:
- Figure 1 depicts a block diagram of a copier and of the associated radio module,
- Figure 2 depicts schematically an electronic circuit incorporated in the copier and radio module of Figure 1,
- Figure 3 depicts schematically a cordless communication system implementing the present invention,
- Figure 4 depicts schematically a circuit incorporated into the system illustrated in Figure 3 and in radio communication with a circuit illustrated in Figure 2,
- Figure 5 depicts a flow diagram of the subprogram implemented by the circuit illustrated in Figure 2 according to the invention,
- Figure 6 depicts a flow diagram of the subprogram implemented by the circuit illustrated in Figure 4 according to the invention, and
- Figure 7 depicts an operating flow diagram of the device illustrated in Figures 1 and 2 adapted to implement an optimisation method.

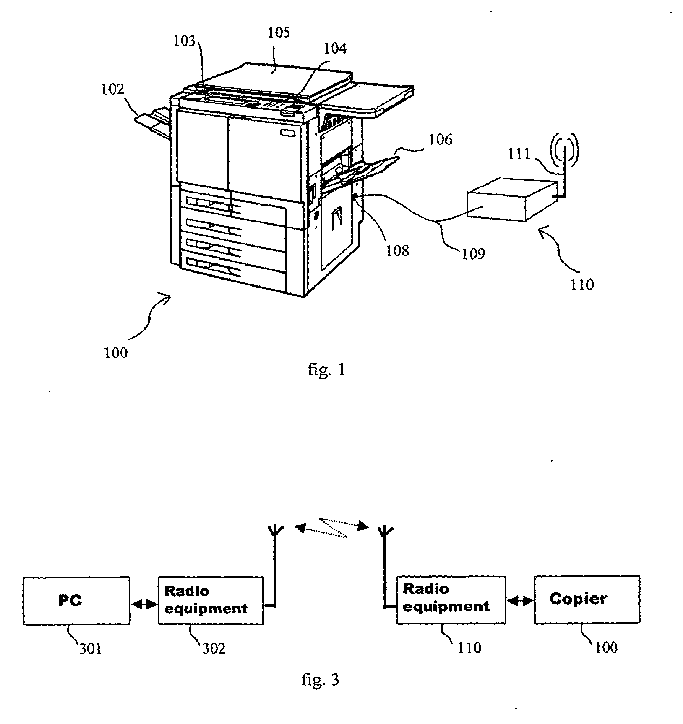

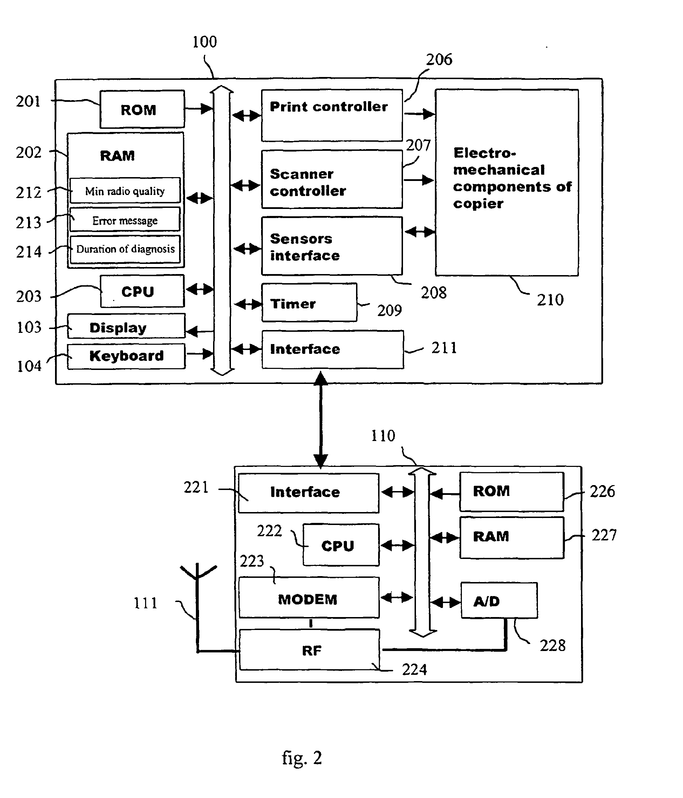

Figure 1 is an overall view of a multifunction copier 100 equipped with an external radio module 110, provided with an antenna 111. The copier 100 has an Ethernet connector 108 and is connected to the Ethernet connector of the radio module 110 by an Ethernet cable 109. The electronic circuit incorporated in this device is depicted in more detail in Figure 2.

Figure 1 uses known sensors, utilised for detecting a person close to the copier:
- a keyboard 104,
- a touch screen display 103,
- a sensor for the position of the cover 105 (not shown),
- a sensor for the presence of a sheet in a feed tray,
- a sensor for the presence of a sheet in a sheet discharge tray,
- a sheet presence sensor in a loader containing documents to be copied, and
- a sensor for the presence of a sheet jammed in the sheet path, whether this path is that of the original document or that of the copies.

This is because pressure on a key on a keyboard 104 or on a touch screen 103, the opening of a cover 105 or of a sheet tray, the presence of a document to be copied in a pathway corresponding to a manual feed 106 and the presence of sheets in a loader placed on the cover 105, indicate directly the presence of a person.

Likewise, the detection of a paper jam by the sensors placed inside the copier 100 indicates the imminent presence of a person close to the copier 100.

This is because, if a paper jam occurs during printing work, there is a high chance that a person will quickly come to the copier in order to remove the jammed sheet. Likewise, the indication of an absence of paper in the feed trays, by the appropriate sensors, gives information on the imminent presence of a person, and the presence of the sheets in the discharge tray 102.

As illustrated in Figure 2, the copier 100 has a main data processing circuit 203, associated with a read only memory 201 and a random access memory 202. The read only memory 201 contains operating programs for the main processing circuit 203, whilst the random access memory temporarily stores the data received from the radio module 110 by means of the interfaces 211 and 221, as well as the data processed by the main processing circuit 203. The main processing circuit 203 is connected to the touch screen display 103, on which it demands the display of messages representing the state of the copier 100.

The main processing circuit 203 is also connected to a keyboard 104, having at least one switch, with which the user can transmit operating commands to the copier 100.

The main processing circuit 203 is connected to the electromechanical components 210 of the copier 100, by means of interfaces 206, 207 and 208.

The interface 208 enables the main processing circuit 203 to control the motors (not shown) which ensure the transportation of the sheets and which drive the moving parts necessary for the functioning of the copier 100.

The interface 208 also makes it possible to connect the main processing circuit 203 to the sensors which give it information about the state of the copier. The copier also has:
- a print controller 206 which enables the main processing circuit 203 to control the electromechanical components 210 responsible for the printing, and
- a controller 207 which enables the main processing circuit 203 to control the electromechanical components 210 responsible for the acquisition of images.

Finally, the main processing circuit is connected to a timer 209 which enables it to measure the duration of the deterioration in the quality of the radio channel. The value of this timer 209 is compared with that of the variable "Diagnosis period" 214 which represents the maximum acceptable duration of interference on a radio channel. A default value of 30 minutes is stored for this variable in the read only memory 201. This duration can be replaced temporarily by a shorter value by means of the keyboard 104 by an installer, in order to obtain a more instantaneous measurement of the quality of the radio channel.

The copier 100 receives data to be printed by means of radio equipment 110.

These two appliances have compatible interfaces 211 and 221 connected together. Here the interfaces 211 and 221 are Ethernet interfaces. These interfaces enable them to exchange data and control messages. In particular the copier 100 can request from the radio equipment 110 the instantaneous value of the quality of the radio channel using the SNMP (Simple Network Management Protocol). This instantaneous value is compared with the variable "minimum acceptable radio quality" 213 stored in the random access memory 202, which makes it possible to determine whether the quality of the radio channel is acceptable at a given moment.

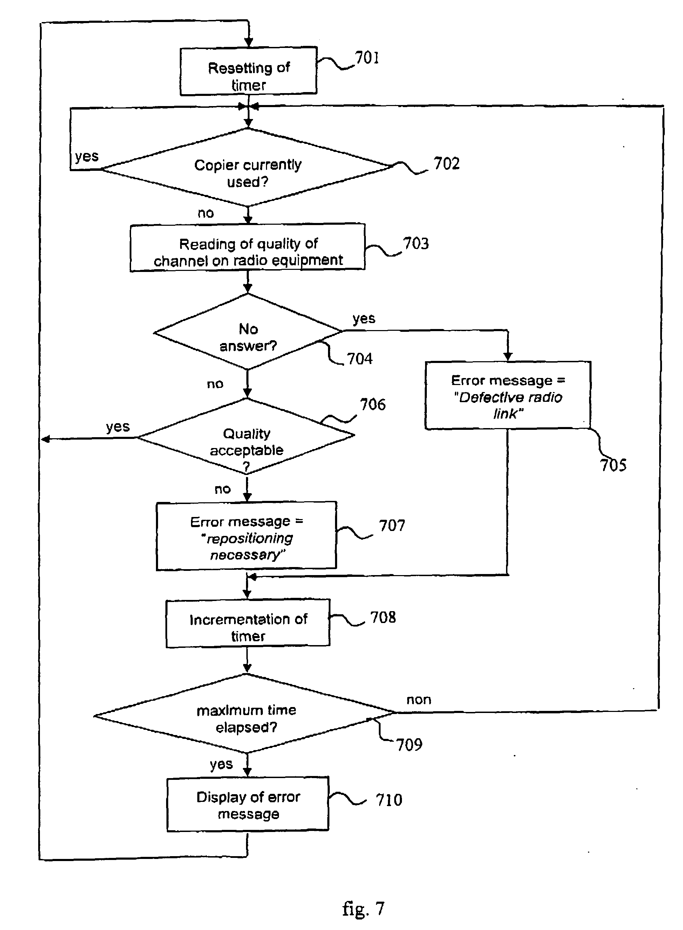

The variable "Error message" 212 contains the error message produced by running the diagnosis subprogram of the radio channel described in Figure 7.

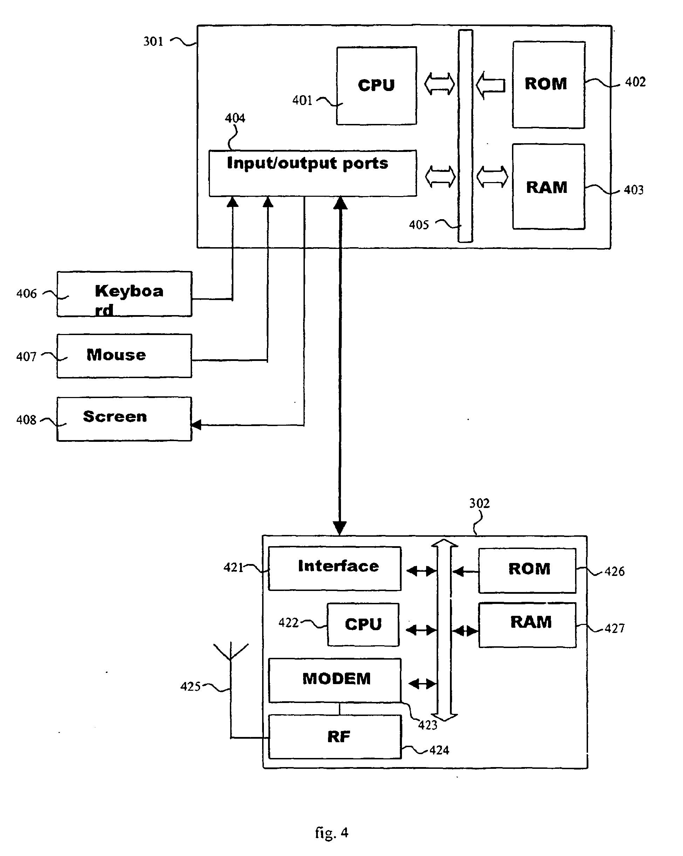

The radio equipment 110 is also composed of a main data processing circuit 222, associated with a read only memory 226 and a random access memory 227. The read only memory 226 contains operating programs for the main processing circuit 222, whilst the random access memory temporarily stores the data received from another similar radio module 302, (Figures 3 and 4), as well as the data processed by the main processing circuit 222.

In particular, a program known as SNMP agent, responsible for collecting information on the quality of the radio link and replying to the SNMP request, is run continuously.

The main processing circuit 222 is connected to an analogue to digital converter 228, which quantifies the level of the radio signal received. The main data processing circuit 222 is connected to a modulation and demodulation circuit 223, converting the streams of binary information into analogue signals. The modulation and demodulation circuit 223 is connected to an RF stage 224, which amplifies the signals and transposes them in frequency. Finally, the RF stage 224 uses an antenna 111 for receiving and transmitting the radio waves.

The copier 100 and radio equipment 110 described above are conventional and well known to persons skilled in the art. They will therefore not be detailed any further here.

Figure 3 depicts an overall diagram enabling the invention to be implemented. Two similar items of radio equipment 302 and 110 enable a PC301 and a copier 100 to communicate with each other using a radio channel. The data exchange can take place bidirectionally, the items of radio equipment being transmitter or receiver in turn. This arrangement makes it possible to implement printing applications.

With regard to Figure 3, it is convenient to arbitrarily call the radio equipment 302 connected to the PC: the base, and the radio equipment 110 connected to the copier: the station.

According to variants, not shown, the radio equipment 302 is incorporated in the computer 301 and/or the radio equipment 110 is incorporated in the office equipment 100.

Figure 4 depicts the main component of an electronic device 301 implementing the adaptation method according to the invention. This device 301 has an architecture known in the field of programmable electronic systems, placed on the use of components connected together by a bus 405 and a central unit 401.

For example, these elements are conjointly associated in a personal computer, of a known type, for example of the type operating with a Pentium^{™} microprocessor 401 from Intel^{™}, which has at least one random access memory RAM 403, a non-volatile memory ROM 402, a screen 408, a mouse 407 and a keyboard 406.

An input/output port 404 receives the digital information coming from the user, by means of the keyboard 406, the mouse 407 or any other communication means, and transmits them, under the control of the central unit 401, to a random access memory RAM 403.

In addition, the input/output port 404 transmits, under the control of the central unit 401, the data intended to be displayed, to the screen 408. The input/output port 404 is also associated with a radio module 412. The latter makes it possible to send and receive data to the printing device 100, which also has its own radio module 110 (Figure 3).

The random access memory RAM 403, of a known type, contains registers intended to receive parameters, variables, digital data and intermediate processing values.

The non-volatile memory 402, of a well known type, stores the program which enables the adaptation device and, in particular, the central unit 401, to operate.

The radio equipment 302 is also composed of a main data processing circuit 422, associated with a read only memory 426 and a random access memory 427. The read only memory 426 contains operating programs for the main processing circuit 422, whilst the random access memory 427 temporarily stores the data received form another similar radio module 110 (Figures 2 and 3), as well as the data processed by the main processing circuit 422.

The main data processing circuit 422 is connected to a modulation and demodulation circuit 423, converting the streams of binary information into analogue signals.

The modulation and demodulation circuit 423 is connected to an RF stage 424, which amplifies the signals and transposes them in frequency. Finally, the RF stage 424 uses an antenna 425 for receiving and transmitting the radio waves.

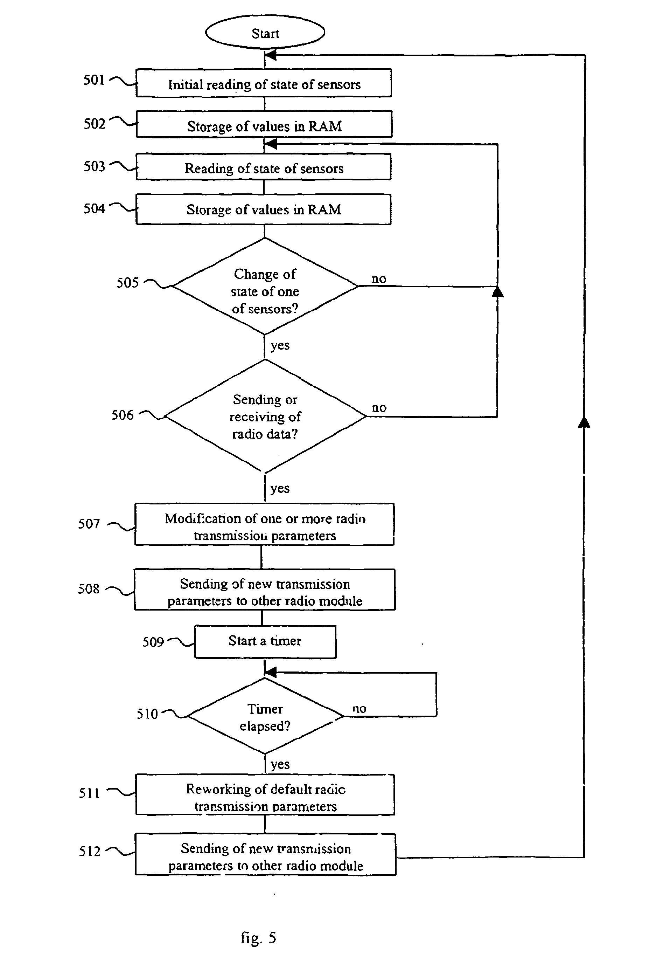

Figure 5 presents the flow diagram of the subprogram resident in read only memory of the copier and implementing the adaptation method of the present invention.

In Figure 5, it can be seen that the first operation 501 of the subprogram consists of reading of the values of all the sensors of the copier useful to the detection of a person close by: pressure on the keyboard 104 and/or the touch screen display 103, error message (paper jam), no paper in the feed trays, paper in the loader and in the discharge tray (photocopier), open or closed state of the drawers, manual feed or cover.

These values issuing from the sensors are stored in the RAM in the form of a table, and constitute the reference values, operation 502. This operation is then repeated: new values are read on the sensors, operation 503, and stored in the RAM in a second table, operation 504. During a test 505, the new values are compared with the reference values.

In addition, the new values represent the new references, and are copied into the first table, during the operation 503, before effecting the reading of other new values.

If the result of test 505 is negative, operations 503 to 505 are reiterated, storing the measured values in the second table until a change is detected (result of test 505 positive).

If one of the values is changed, when the result of the test 505 is positive, this means that it is probable that a person is close to the copier. When it is deemed that a person has been detected, during a test 506, it is determined whether a radio transmission is current in order to determine whether it is necessary to modify the radio transmission parameters. When the result of test 506 is negative, that is to say in the absence of radio traffic, the parameters are not changed and operations 503 to 506 are reiterated.

In the contrary case, result of test 506 is positive, during an operation 507, the instruction to modify the radio transmission parameters and, during an operation 508, the instruction to inform the base 302 of these changes, are sent to the station 110.

Next, during an operation 509, a timer is initialised with a sufficient period to consider that the person is no longer close to the copier (for example five minutes). A timer value test 510 becomes positive at the end of the timer, that is to say the counting of the initial number of clock pulses has been completed, the instruction to repeat its radio transmission parameters by default is sent to the station, as well as the instruction to inform the base thereof, operation 511. The timer counting period is a period of around two minutes, which represents the mean duration of the presence of a person close to the copier 100.

According to a variant, not shown, each type of sensor is associated with a predetermined period, in order to take account of the fact that a person spends more time close to the copier in the event of a jam than in the case of the absence of paper in a feed tray.

Finally, during an operation 512, the radio transmission parameters are sent by default, before reiterating operation 501.

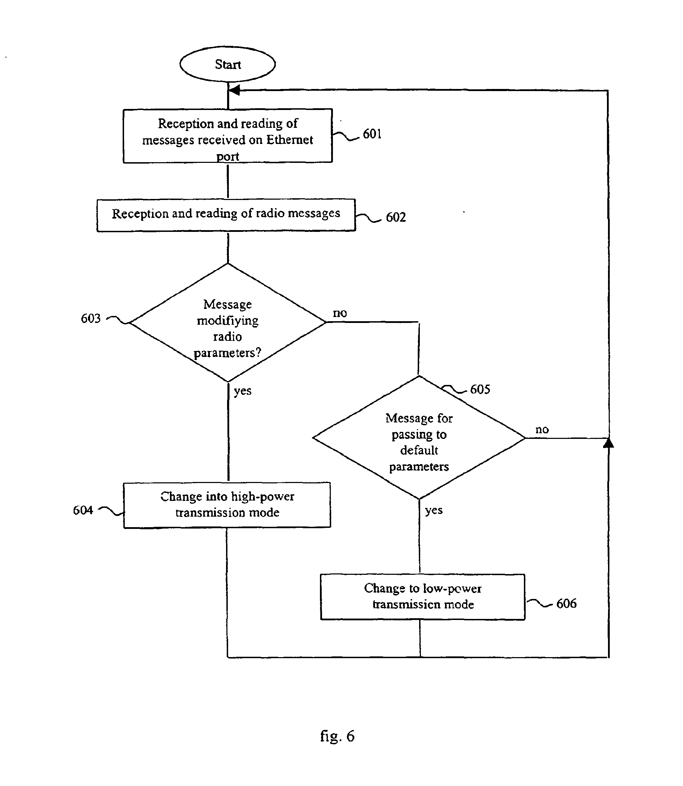

Figure 6 illustrates the flow diagram of the subprogram resident in the read only memory of the associated transmission-reception system (radio equipment 302). This subprogram is executed when the radio equipment 302 receives a radio message or an Ethernet message. It enables the radio equipment 302 to modify its radio transmission parameters if it has received the instruction. An example is given here where the modified parameter is the transmission power.

In the embodiment described and depicted, the transmission power is in fact increased when it is determined that there is a person close to the copier 100.

Once the message has been received and decoded, during one of the operations 601 (messages on the Ethernet port), or 602 (radio message), during a test 603, it is determined whether one of the messages is a radio parameter modification message. In the event of a request to modify the radio transmission parameters, result of test 603, there is a change to high-power transmission mode (by activating a switch, not shown), during an operation 604, and then the operation 601 is reiterated.

When the result of test 603 is negative, during a test 605, it is determined whether one of the messages is a message for return to the default radio parameters. When the result of test 605 is negative, operation 601 is reiterated. When the result of test 605 is positive, during an operation 606, the transmission power will be fixed at the low level by default (by return to the original position of the switch activated during operation 604. Then operation 601 is reiterated.

In the embodiment described and depicted, the radio communication is bidirectional and symmetrical. Thus each transmission parameter change on the base 302 is accompanied by the same change applied to the station 110, and vice versa.

In variants which are not shown, other radio transmission parameters are changed when it is estimated that a person is situated close to the office equipment to which the present invention applies. These parameters are:
- the frequency band used,
- the type of modulation, amplitude, frequency or phase,
- the modulation index,
- the spectrum spreading factor, in the case of a transmission with spread spectrum,
- the number of frequency jumps in the case of a transmission with spread spectrum by frequency jumping,
- the sequence of frequency jumps in the case of a transmission with spread spectrum by frequency jumping,
- equalisation of the spectrum on reception (by use of an adaptive filter), and
- the type of error correction code.

Finally, Figure 7 illustrates the flow diagram of the subprogram resident in read only memory of the copier, and implementing an optimisation method. This subprogram is executed at each initialisation of the copier.

The first step 701 of the subprogram consists of setting the timer 209 to zero.

Next, during a test 702, it is verified that the copier is not currently being used. For this purpose the state of the different sensors is checked (between parentheses the characteristics represented by the state of the sensors are shown), the keyboard 104 (use/non-use) and the sensors associated with the cover 105 (opening/closing), manual feed 106 (presence/absence of sheet), the sheet trays 107 (empty/not empty and open/closed), the sheet paths (presence/absence of information on any sheet jams), not shown, and the sheet loader (presence/absence), not shown.

If one of these sensors is activated, this means that someone is currently using the copier 100, or at least is situated close by and is temporarily interfering with the radio link. In this case, the test 702 is reiterated: no measurement is made of the quality of the radio channel but it is waited until use of the copier has ended.

As soon as a copier is no longer being used, the result of the test 702 being negative, the central unit 203 requests the external radio equipment 110 to supply to it the instantaneous value of the quality of the radio channel, during an operation 703. This is done using a request known as "SNMP GetRequest", to which the radio equipment 110 responds with a response known as "GetResponse" containing the required information. This information is exchanged by means of the Ethernet interface of the copier 108 and that of the radio equipment 110 by means of the Ethernet cable 109.

During a test 704, the central 203 determines whether it has obtained a response from the radio equipment 110.

It can happen that the radio equipment 101 is faulty, or that the Ethernet cable 109 has accidentally been disconnected. In this case, the result of the test 704 is positive and the copier 100 allocates the value "Defective radio link" to the variable "Error message" 212, during an operation 705, before performing an operation 708, during which the value of the timer 209 is incremented. During a test 709, the central unit 203 determines whether or not the maximum time has elapsed. When the result of the test is positive, the value of the timer 209 being equal to that of the variable "duration of diagnosis" 214, during an operation 710, the content of the error message, that is to say here "Defective radio link" is displayed on the display 102 and printed, by means of the print controller 206. Next the operation 701 is reiterated.

When the result of the test 704 is negative, the instantaneous value of the quality of the radio channel being obtained from the radio equipment 110, this value is compared with the value of the variable "minimum acceptable radio quality", during a test 706 which determines whether or not the instantaneous radio quality is greater than this variable.

If the instantaneous value is greater than the minimum quality, test 706 positive, the operation 701 is reiterated and the timer 209 is reset to zero.

If the instantaneous value of the quality of the radio channel is lower than the required minimum, test 706 is negative, the value "Repositioning necessary" is allocated to the variable "Error message" 212 during an operation 707.

In a first variant, not shown, if the radio module 101 and its antenna 111 are fixed to the copier 100, the error message can be modified in order to become "Repositioning of copier necessary". In a second variant, not shown, if the radio module can be moved independently of the copier, the message will be "Repositioning of an antenna necessary".

Next, the value of the timer is incremented, operation 708, and when its value becomes equal to that of the variable "Duration of diagnosis" 214, test 709 positive, the content of the error message, that is to say "Repositioning necessary", is displayed and printed during the operation 710, before the operation 701 is reiterated.

With reference to Figure 1, it can be seen that the diagnosis messages on the state of the radio link can be either printed, in which case they emerge in the discharge tray 102, or displayed by means of the display 103.

According to a third variant, not shown, the analysis of the transmission quality is effected by determining a number of redundancies necessary for the correction of data received during a communication. This is because this number of redundancies represents the quality of communication between the communication systems consisting of the radio modules 302 and 110 (Figure 3).

According to a fourth variant, not shown, in order to determine whether or not the transmission quality defect is lasting, a ratio of period of poor reception quality (test 706 positive), to a total analysis period (duration of the procedure illustrated in Figure 7), on the one hand, and a limit value on the other hand, in place of the test 709. When said ratio is greater than the said limit value (for example equal to ½), the operation 710 is triggered.

According to a fifth variant, not shown, in order to inform the user of the positioning fault, the optimisation device causes a signal to be transmitted. The signal may be electrical, for example, in order to inform a computer maintenance system, audible, or visual, in order to alert the user even if he is not very attentive.

It should be observed here that, when poor positioning is detected, the transmission quality being defective on a lasting basis, the user can, as wished, move the base or the station.

According to a variant, not shown, the communication quality is determined independently of the presence of a user in the vicinity of the office equipment.

## Claims

1. A device comprising office equipment (100) and a radio transmission means (110), said office equipment (100) having sensors which include:
- at least one of:
- a key board,
- a touch screen,
- a cover position sensor,
- a sensor for the presence of a sheet in a feed tray,
- a sensor for the presence of a sheet in a sheet discharge tray,
- a sheet presence sensor in a loader containing documents to be copied, and/or
- a sensor for the presence of a sheet jammed in the sheet path;
- means (201 to 203) of estimating the presence of a user, adapted to take into account the signals coming from said sensors, and
- means (201 to 203) of modifying a radio transmission parameter of said transmission means according to the estimation of presence effected by said estimation means.

2. Parameter adaptation device according to Claim 1, **characterised in that** it has a means (201 to 203) of determining a time elapsed after a modification to the radio transmission parameter by the modification means, said modification means (201 to 203) being adapted, when said period has elapsed, to give to each parameter its initial value, the initial value which proceeded the modification resulting from the estimation of the presence of a user.

3. Device according to any one of Claims 1 or 2, **characterised in that** the parameter modification means is adapted so that at least one radio transmission power used is modified.

4. Device according to any one of Claims 1 to 3, **characterised in that** the parameter modification means is adapted so that at least one radio frequency band used is modified.

5. Device according to any one of Claims 1 to 4, **characterised in that** the parameter modification means is adapted so that at least one type of modulation used is modified.

6. Device according to any one of Claims 1 to 5, **characterised in that** the parameter modification means is adapted so that at least one modulation index is modified.

7. Device according to any one of Claims 1 to 6, **characterised in that** the parameter modification means is adapted so that at least one spectrum spreading factor is modified.

8. Device according to any one of Claims 1 to 7, **characterised in that** the parameter modification means is adapted so that at least one frequency jumping sequence is modified.

9. Device according to any one of Claims 1 to 8, **characterised in that** it has an adaptive filter and **in that** the parameter modification means is adapted so that at least one equalisation of the spectrum on reception, an equalisation implemented by said filter, is modified.

10. Device according to any one of Claims 1 to 9, **characterised in that** the parameter modification means is adapted so that at least one type of error correction code is modified.

11. Method of adapting radio transmission parameters of a device comprising office equipment (100) and a radio transmission means (110), said office equipment having sensors which include at least one of:
- a key board,
- a touch screen,
- a cover position sensor,
- a sensor for the presence of a sheet in a feed tray,
- a sensor for the presence of a sheet in a sheet discharge tray,
- a sheet presence sensor in a loader containing documents to be copied, and/or
- a sensor for the presence of a sheet jammed in the sheet path;
**characterised in that** it includes:
- a step (503 to 505) of estimating the presence of a user during which the signals coming from said sensors are taken into account, and
- a step (507) of determining a radio transmission parameter of said transmission means taking into account the estimation of presence effected during the estimation step.

12. Parameter adaptation method according to Claim 11, **characterised in that** it includes:
- a step of determining an elapsed time (509, 510) after a radio transmission parameter modification operation, and when the step of determining the lapse of time indicates that the said time has elapsed,
- a parameter reinitialisation step (511, 512), during which there is given, to each parameter modified during the modification step, its initial value, which preceded the modification step.

13. Network, **characterised in that** it includes a device according to any one of Claims 1 to 10.

14. Computer, **characterised in that** it includes a device according to any one of Claims 1 to 10.

15. Copier, **characterised in that** it includes a device according to anyone of Claims 1 to 10.

16. Facsimile machine, **characterised in that** it includes a device according to any one of Claims 1 to 10.

17. Printer, **characterised in that** it includes a device according to any one of Claims 1 to 10.

18. Scanner, **characterised in that** it includes a device according to any one of Claims 1 to 10.

19. Camera, **characterised in that** it includes a device according to any one of Claims 1 to 10.

20. Information terminal, **characterised in that** it includes a device according to any one of Claims 1 to 10.

21. Information storage means which can be read by a computer or microprocessor storing instructions of a computer program, **characterised in that** it is adapted to implement the adaptation method according to one of Claims 11 or 12.

22. Information storage means according to Claim 21, **characterised in that** it is partially or totally removable.

## Patentansprüche

1. Vorrichtung, die eine Büroausrüstung (100) und eine Funkübertragungseinrichtung (110) aufweist, wobei die Büroausrüstung (100) Sensoren aufweist, die umfassen:
zumindest eines von:
- einer Tastatur,
- einem berührungsempfindlichen Bildschirm,
- einem Abdeckungspositionssensor,
- einem Sensor für die Präsenz eines Blatts in einem Zuführungsfach,
- einem Sensor für die Präsenz eines Blatts in einem Blattauswurffach,
- einem Blattpräsenzsensor in einer Ladeeinrichtung, die zu kopierende Dokumente enthält, und/oder
- einem Sensor für die Präsenz eines in dem Blattweg eingeklemmten Blatts; und
eine Einrichtung (201 bis 203) zum Schätzen der Präsenz eines Benutzers, die angepasst ist, die von den Sensoren kommenden Signale zu berücksichtigen, und
eine Einrichtung (201 bis 203) zum Modifizieren eines Funkübertragungsparameters der Übertragungseinrichtung gemäß der durch die Schätzeinrichtung ausgeführten Präsenzschätzung.

2. Parameteranpassungsvorrichtung gemäß Anspruch 1, **dadurch gekennzeichnet, dass** sie eine Einrichtung (201 bis 203) zum Bestimmen einer Zeit aufweist, die nach einer Modifikation an dem Funkübertragungsparameter durch die Modifikationseinrichtung vergangen ist, wobei die Modifikationseinrichtung (201 bis 203) angepasst ist, wenn die Zeitdauer abgelaufen ist, jedem Parameter seinen anfänglichen Wert zu geben, wobei sich der anfängliche Wert, der der Modifikation vorangegangen ist, aus der Schätzung der Präsenz eines Benutzers ergibt.

3. Vorrichtung gemäß einem der Ansprüche 1 oder 2, **dadurch gekennzeichnet, dass** die Parametermodifikationseinrichtung so angepasst ist, dass zumindest eine verwendete Funkübertragungsleistung modifiziert wird.

4. Vorrichtung gemäß einem der Ansprüche 1 bis 3, **dadurch gekennzeichnet, dass** die Parametermodifikationseinrichtung so angepasst ist, dass zumindest ein verwendetes Funkfrequenzband modifiziert wird.

5. Vorrichtung gemäß einem der Ansprüche 1 bis 4, **dadurch gekennzeichnet, dass** die Parametermodifikationseinrichtung so angepasst ist, dass zumindest ein verwendeter Modulationstyp modifiziert wird.

6. Vorrichtung gemäß einem der Ansprüche 1 bis 5, **dadurch gekennzeichnet, dass** die Parametermodifikationseinrichtung so angepasst ist, dass zumindest ein Modulationsindex modifiziert wird.

7. Vorrichtung gemäß einem der Ansprüche 1 bis 6, **dadurch gekennzeichnet, dass** die Parametermodifikationseinrichtung so angepasst ist, dass zumindest ein Spektrumspreizfaktor modifiziert wird.

8. Vorrichtung gemäß einem der Ansprüche 1 bis 7, **dadurch gekennzeichnet, dass** die Parametermodifikationseinrichtung so angepasst ist, dass zumindest eine Frequenzsprungsequenz modifiziert wird.

9. Vorrichtung gemäß einem der Ansprüche 1 bis 8, **dadurch gekennzeichnet, dass** sie ein adaptives Filter aufweist, und dass die Parametermodifikationseinrichtung so angepasst ist, dass zumindest eine Entzerrung des Spektrums bei Empfang, eine durch das Filter implementierte Entzerrung, modifiziert wird.

10. Vorrichtung gemäß einem der Ansprüche 1 bis 9, **dadurch gekennzeichnet, dass** die Parametermodifikationseinrichtung so angepasst ist, dass zumindest ein Typ von Fehlerkorrekturcode modifiziert wird.

11. Verfahren zum Anpassen von Funkübertragungsparametern einer Vorrichtung, die eine Büroausrüstung (100) und eine Funkübertragungseinrichtung (110) aufweist, wobei die Büroausrüstung Sensoren aufweist, die zumindest eines umfassen von:
- einer Tastatur,
- einem berührungsempfindlichen Bildschirm,
- einem Abdeckungspositionssensor,
- einem Sensor für die Präsenz eines Blatts in einem Zuführungsfach,
- einem Sensor für die Präsenz eines Blatts in einem Blattauswurffach,
- einem Blattpräsenzsensor in einer Ladeeinrichtung, die zu kopierende Dokumente enthält, und/oder
- einem Sensor für die Präsenz eines in dem Blattweg eingeklemmten Blatts;
**dadurch gekennzeichnet, dass** es umfasst:
einen Schritt (503 bis 505) zum Schätzen der Präsenz eines Benutzers, während dessen die von den Sensoren kommenden Signale berücksichtigt werden, und
einen Schritt (507) zum Bestimmen eines Funkübertragungsparameters der Übertragungseinrichtung unter Berücksichtigung der während des Schätzschritts ausgeführten Präsenzschätzung.

12. Parameteranpassungsverfahren gemäß Anspruch 11, **dadurch gekennzeichnet, dass** es umfasst:
einen Schritt zum Bestimmen einer vergangenen Zeit (509, 510) nach einem Funkübertragungsparameter-Modifikationsbetrieb, und, wenn der Schritt zum Bestimmen des Zeitablaufs angibt, dass die Zeit abgelaufen ist,
einen Parameterreinitialisierungsschritt (511, 512), während dessen jedem während des Modifikationsschritts modifizierten Parameter sein anfänglicher Wert gegeben wird, der dem Modifikationsschritt vorangegangen ist.

13. Netzwerk, **dadurch gekennzeichnet, dass** es eine Vorrichtung gemäß einem der Ansprüche 1 bis 10 umfasst.

14. Computer, **dadurch gekennzeichnet, dass** er eine Vorrichtung gemäß einem der Ansprüche 1 bis 10 umfasst.

15. Kopierer, **dadurch gekennzeichnet, dass** er eine Vorrichtung gemäß einem der Ansprüche 1 bis 10 umfasst.

16. Faxgerät, **dadurch gekennzeichnet, dass** es eine Vorrichtung gemäß einem der Ansprüche 1 bis 10 umfasst.

17. Drucker, **dadurch gekennzeichnet, dass** er eine Vorrichtung gemäß einem der Ansprüche 1 bis 10 umfasst.

18. Scanner, **dadurch gekennzeichnet, dass** er eine Vorrichtung gemäß einem der Ansprüche 1 bis 10 umfasst.

19. Kamera, **dadurch gekennzeichnet, dass** sie eine Vorrichtung gemäß einem der Ansprüche 1 bis 10 umfasst.

20. Informationsendgerät, **dadurch gekennzeichnet, dass** es eine Vorrichtung gemäß einem der Ansprüche 1 bis 10 umfasst.

21. Informationsspeichereinrichtung, die von einem Computer oder einem Mikroprozessor gelesen werden kann, wobei sie Anweisungen eines Computerprogramms speichert, **dadurch gekennzeichnet, dass** sie angepasst ist, das Anpassungsverfahren gemäß einem der Ansprüche 11 oder 12 zu implementieren.

22. Informationsspeichereinrichtung gemäß Anspruch 21, **dadurch gekennzeichnet, dass** sie teilweise oder vollständig austauschbar ist.

## Revendications

1. Dispositif comprenant un équipement de bureau (100) et un moyen de transmission radio (110), l'équipement de bureau (100) ayant des capteurs qui comprennent :
- au moins un de :
- un clavier,
- un écran tactile,
- un capteur de position de couvercle,
- un capteur pour détecter la présence d'une feuille dans un bac d'alimentation,
- un capteur pour détecter la présence d'une feuille dans un bac d'évacuation de feuilles,
- un capteur de présence de feuille' dans un chargeur contenant des documents à copier, et/ou
- un capteur pour détecter la présence d'une feuille bloquée dans le chemin de feuille ;
- un moyen (201 à 203) pour estimer la présence d'un utilisateur, adapté pour tenir compte des signaux provenant des capteurs, et
- un moyen (201 à 203) pour modifier un paramètre de transmission radio du moyen de transmission conformément à l'estimation de présence effectuée par le moyen d'estimation.

2. Dispositif d'adaptation de paramètres selon la revendication 1, **caractérisé en ce qu'**il comporte un moyen (201 à 203) pour déterminer une durée écoulée après une modification du paramètre de transmission radio par le moyen de modification, ledit moyen de modification (201 à 203) étant adapté pour donner à chaque paramètre sa valeur initiale, après que ladite durée s'est écoulée, la valeur initiale étant la valeur qui précédait la modification résultant de l'estimation de la présence d'un utilisateur.

3. Dispositif selon l'une quelconque des revendications 1 ou 2, **caractérisé en ce que** le moyen de modification de paramètres est adapté de façon qu'au moins une puissance de transmission radio utilisée soit modifiée.

4. Dispositif selon l'une quelconque des revendications 1 à 3, **caractérisé en ce que** le moyen de modification de paramètres est adapté de façon qu'au moins une bande de fréquences radio utilisée soit modifiée.

5. Dispositif selon l'une quelconque des revendications 1 à 4, **caractérisé en ce que** le moyen de modification de paramètres est adapté de façon qu'au moins un type de modulation utilisé soit modifié.

6. Dispositif selon l'une quelconque des revendications 1 à 5, **caractérisé en ce que** le moyen de modification de paramètres est adapté de façon qu'au moins un indice de modulation soit modifié.

7. Dispositif selon l'une quelconque des revendications 1 à 6, **caractérisé en ce que** le moyen de modification de paramètres est adapté de façon qu'au moins un facteur d'étalement de spectre soit modifié.

8. Dispositif selon l'une quelconque des revendications 1 à 7, **caractérisé en ce que** le moyen de modification de paramètres est adapté de façon qu'au moins une séquence de saut de fréquence soit modifiée.

9. Dispositif selon l'une quelconque des revendications 1 à 8, **caractérisé en ce qu'**il a un filtre adaptatif et **en ce que** le moyen de modification de paramètres est adapté de façon qu'au moins une égalisation du spectre à la réception, qui est une égalisation réalisée par ledit filtre, soit modifiée.

10. Dispositif selon l'une quelconque des revendications 1 à 9, **caractérisé en ce que** le moyen de modification de paramètres est adapté de façon qu'au moins un type de code correcteur d'erreurs soit modifié.

11. Procédé d'adaptation de paramètres de transmission radio d'un dispositif comprenant un équipement de bureau (100) et un moyen de transmission radio (110), l'équipement de bureau ayant des capteurs qui incluent au moins un de :
- un clavier,
- un écran tactile,
- un capteur de position de couvercle,
- un capteur pour détecter la présence d'une feuille dans un bac d'alimentation,
- un capteur pour détecter la présence d'une feuille dans un bac d'évacuation de feuilles,
- un capteur de présence de feuille dans un chargeur contenant des documents à copier, et/ou
- un capteur pour détecter la présence d'une feuille bloquée dans le chemin de feuille ;
**caractérisé en ce qu'**il comprend :
- une étape (503 à 505) consistant à estimer la présence d'un utilisateur, pendant laquelle on prend en compte les signaux provenant desdits capteurs, et
- une étape (507) consistant à déterminer un paramètre de transmission radio du moyen de transmission en tenant compte de l'estimation de présence effectuée pendant l'étape d'estimation.

12. Procédé d'adaptation de paramètres selon la revendication 11, **caractérisé en ce qu'**il comprend :
- une étape de détermination d'une durée écoulée (509, 510) après une opération de modification de paramètres de transmission radio, et lorsque l'étape de détermination de l'écoulement de durée indique que ladite durée est écoulée,
- une étape de réinitialisation de paramètres (511, 512), au cours de laquelle on donne, à chaque paramètre modifié au cours de l'étape de modification, sa valeur initiale, qui précédait l'étape de modification.

13. Réseau, **caractérisé en ce qu'**il inclut un dispositif conforme à l'une quelconque des revendications 1 à 10.

14. Ordinateur, **caractérisé en ce qu'**il inclut un dispositif conforme à l'une quelconque des revendications 1 à 10.

15. Copieur, **caractérisé en ce qu'**il inclut un dispositif conforme à l'une quelconque des revendications 1 à 10.

16. Télécopieur, **caractérisé en ce qu'**il inclut un dispositif conforme à l'une quelconque des revendications 1 à 10.

17. Imprimante, **caractérisée en ce qu'**elle inclut un dispositif conforme à l'une quelconque des revendications 1 à 10.

18. Scanner, **caractérisé en ce qu'**il inclut un dispositif conforme à l'une quelconque des revendications 1 à 10.

19. Appareil de prise de vues, **caractérisé en ce qu'**il inclut un dispositif conforme à l'une quelconque des revendications 1 à 10.

20. Terminal d'information, **caractérisé en ce qu'**il inclut un dispositif conforme à l'une quelconque des revendications 1 à 10.

21. Moyen de stockage d'information qui peut être lu par un ordinateur ou un microprocesseur, stockant des instructions d'un programme d'ordinateur, **caractérisé en ce qu'**il est adapté pour mettre en oeuvre le procédé d'adaptation selon l'une quelconque des revendications 11 ou 12.

22. Moyen de stockage d'information selon la revendication 21, **caractérisé en ce qu'**il est partiellement ou totalement amovible.
